(19) Europäisches Patentamt
European Patent Office
Office européen des brevets

(11) **EP 1 321 888 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
*G06K 19/073* (2006.01)  *H04L 9/06* (2006.01)

(21) Anmeldenummer: **02102788.3**

(22) Anmeldetag: **18.12.2002**

(54) **Verfahren zur Erhöhung der Sicherheit von Schaltkreisen gegen unbefugten Zugriff**

Method for increasing the protection of an electronic circuit against unauthorized access

Méthode pour augmenter la protection d'un circuit électronique contre l'acces non-autorisé

(84) Benannte Vertragsstaaten:
**AT BE BG CH CY CZ DE DK EE ES FI FR GB GR IE IT LI LU MC NL PT SE SI SK TR**

(30) Priorität: **19.12.2001 DE 10162309**

(43) Veröffentlichungstag der Anmeldung:
**25.06.2003 Patentblatt 2003/26**

(73) Patentinhaber: **NXP B.V.**
**5656 AG Eindhoven (NL)**

(72) Erfinder:
• **Peeters, Adrianus Marinus Gerardus**
**Postfach 500442**
**52088, Aachen (DE)**

• **Feuser, Markus**
**Postfach 500442**
**52088, Aachen (DE)**

(74) Vertreter: **Richter, Werdermann, Gerbaulet & Hofmann**
**Neuer Wall 10**
**20354 Hamburg (DE)**

(56) Entgegenhaltungen:
**WO-A-00/19353          US-A- 5 404 402**

• **VAN BERKEL C H ET AL: " Applications of asynchronous circuits" PROCEEDINGS OF THE IEEE, Bd. 87, Nr. 2, 1999, XP001146517**

**Beschreibung**

Die Erfindung betrifft ein Verfahren zur Erhöhung der Sicherheit von Schaltkreisen gegen unbefugten Zugriff, die insbesondere genutzt werden können, um die Kartensicherheit insbesondere bei Smartcards zu verbessern gegenüber Angriffen, die den Ansatz verfolgen, aus einer Messung des Strom- bzw. Spannungsverbrauchs Informationen über das Innere einer elektrischen Schaltung zu erlangen, gemäß dem Oberbegriff des unabhängigen Anspruchs 1. Die Erfindung betrifft weiterhin eine Anordnung gemäß dem Oberbegriff des unabhängigen Anspruchs 4 (vgl. Druckschrift WO 00 19353 A).

Die Entwicklung der Mikroelektronik in den 70er-Jahren ermöglichte es, kleine Computer im Kreditkartenformat ohne Benutzungsschnittstelle herzustellen. Solche Computer werden als Smartcards bezeichnet. In einer Smartcard sind Datenspeicher und arithmetisch-logische Einheit in einem einzigen Chip von wenigen Quadratmillimetern Größe integriert. Smartcards werden insbesondere als Telefonkarten, GSM-SIM-Karten, im Bankenbereich und im Gesundheitswesen eingesetzt. Die Smartcard ist damit zur allgegenwärtigen Rechenplattform geworden.

Smartcards werden derzeit vornehmlich als sicherer Aufbewahrungsort für geheime Daten und als sichere Ausführungsplattform für kryptographische Algorithmen betrachtet. Die Annahme einer relativ hohen Sicherheit der Daten und Algorithmen auf der Karte liegt im Hardwareaufbau der Karte und den nach außen geführten Schnittstellen begründet. Die Karte stellt sich nach außen als "Black Box" dar, deren Funktionalität nur über eine wohldefinierte Hardware- und Softwareschnittstelle in Anspruch genommen werden kann, und die bestimmte Sicherheitspolicies erzwingen kann. Zum einen kann der Zugriff auf Daten an bestimmte Bedingungen geknüpft werden. Kritische Daten, wie z. B. geheime Schlüssel eines Public-Key-Verfahrens, können dem Zugriff von außen sogar völlig entzogen werden. Zum anderen ist eine Smartcard in der Lage, Algorithmen auszuführen, ohne daß die Ausführung der einzelnen Operationen von außen beobachtet werden kann. Die Algorithmen selbst können auf der Karte vor Veränderung und Auslesen geschützt werden. Im objektorientierten Sinn läßt sich die Smartcard als abstrakter Datentyp auffassen, der über eine wohldefinierte Schnittstelle verfügt, ein spezifiziertes Verhalten aufweist und selbst in der Lage ist, die Einhaltung bestimmter Integritätsbedingungen bezüglich seines Zustandes sicherzustellen.

Es gibt im Wesentlichen zwei verschiedene Typen von Smartcards. Speicherkarten besitzen lediglich eine serielle Schnittstelle, eine Adressierungs- und Sicherheitslogik und ROM- und EEPROM-Speicher. Diese Karten besitzen nur eingeschränkte Funktionalität und dienen einer spezifischen Anwendung. Dafür sind sie besonders billig herzustellen. Als Mikroprozessorkarten hergestellte Smartcards stellen im Prinzip einen vollständigen Universalrechner dar.

Der Herstellungs- und Auslieferungsprozeß für Chipkarten gliedert sich in folgende Phasen:

-    Herstellen des Halbleiters,

-    Einbetten des Halbleiters,

-    Bedrucken der Karte,

-    Personalisierung der Karte,

-    Ausgeben der Karte.

Im Allgemeinen wird jede Phase von einer auf die jeweilige Arbeit spezialisierten Firma durchgeführt. Beim Herstellen der Halbleiter ist insbesondere bei Karten mit festverdrahteter Sicherheitslogik auf eine gute betriebsinterne Sicherheit zu achten. Damit vom Hersteller ein korrekter Endtest durchgeführt werden kann, muß der komplette Speicher frei zugänglich sein. Erst nach dem Endtest wird der Chip durch einen Transportcode gesichert. Danach ist der Zugriff auf den Kartenspeicher nur für berechtigte Stellen, die den Transportcode kennen, möglich. Ein Diebstahl fabrikneuer Halbleiter bleibt damit ohne Folgen. Berechtigte Stellen können Personalisierer bzw. Kartenausgeber sein. Für das Einbetten und Bedrucken sind keine weiteren Sicherungsfunktionen notwendig Die betreffenden Firmen brauchen den Transportcode nicht zu kennen.

Im Allgemeinen überträgt nicht der Kartenhersteller, sondern die ausgebende Stelle (z. B. Bank, Telefongesellschaft, Krankenkasse etc.) die personenspezifischen Daten in die Karte. Diesen Vorgang nennt man Personalisierung. Für sie ist die Kenntnis des Transportcodes notwendig.

Das Ausgeben der Karte, also der Transport von der ausgebenden Stelle zum Karteninhaber, stellt ein weiteres Sicherheitsproblem dar. Genau genommen ist nur die persönliche Ausgabe an den Karteninhaber gegen Unterschrift und Vorlage des Personalausweises sicher. Ein Versand per Post ist zwar oft wirtschaftlicher, aber auch ziemlich unsicher. Ein Problem ist auch das Übermitteln der PIN an den Karteninhaber, hier muß die gleiche Sorgfalt wie für die Karte gelten.

Bedingt durch die brisanten, sicherheitsrelevanten Inhalte der auf Smartcard-Controllern befindliche Speicher ist neben der Beachtung dieser Sicherungsmaßnahmen ein zusätzlicher Schutz gegen mögliche Aktivitäten von Hackern zu gewährleisten, die sich auf alle Phasen des Lebenslaufes einer Smartcard - beginnend von der Herstellung, über Transport, Nutzung der Karte bis zu Manipulationen unbrauchbar gewordener Karten - erstrecken.

Eine Möglichkeit, an geheime Informationen zu gelangen, besteht darin, auf Smartcard-Controller die sog. "Differential Power Analysis" (DPA) anzuwenden, um durch Auswertung der Leistungsaufnahme auf interne Vorgänge in dem Smartcard-Controller zu schließen. DPA ist ein neues Verfahren, welches es erlaubt, neben reinen funktionalen Erkenntnissen zusätzlich interne Informationen, welche in integrierten Schaltkreisen (z B. Smartcard-Controller) gespeichert sind, zu gewinnen. Die Grundlage dieses Verfahrens ist es, zusätzlich zu den IO-Signalen, entweder den Stromverbrauch des integrierten Schaltkreises oder die Spannungsspitzen der Stromversorgung zu analysieren, während eine bestimmte Berechnung durchgeführt wird.

Die Analyse kann dann erfolgreich durchgeführt werden, wenn die Anzahl A von analogen Leistungsverläufen S(k, t) über die Zeit t (das heißt entweder Strom oder Spannung) mit k={1, ..., A} verschiedenen Operanden (die von den Berechnungen abhängen) in folgender Weise aufsummiert werden kann.

$$T(i,t) = \sum_{k=1}^{A} p(i,k) \cdot S(k,t) \quad \text{mit Koeffizienten } p(i, k), i=\{0, 1, 2, \ldots\}$$

A ist typischerweise 10.000. Bei Betrachtung von verschiedenen Leistungsverläufen $S(k_1, t_1)$, $S(k_2, t_1)$ und $S(k_3, t_1)$ zu einer bestimmten Zeit $t=t_1$ ist Differential Power Analysis nur erfolgreich anwendbar, wenn der integrierte Schaltkreis zu diesen Zeiten die selbe Operation ausführt, während die Operanden für k={1, ..., A} verschieden sind In anderen Worten: für eine erfolgreiche DPA muß in allen Leistungsverläufen S(k, t) zur selben Zeit die selbe Operation ausgeführt werden. Für Einzelheiten vergleiche man [1] und [2].

Die Erfindung bezieht sich auf Klassen von Schaltkreisen, in welchen sich die Arbeitsweise bzw. Leistungsfähigkeit (sog. "Performance") des Schaltkreises automatisch an die verfügbare Spannung anpaßt. Die meisten asynchronen (non-clocked) Klassen von Schaltkreisen besitzen diese Eigenschaft; manche synchronen (clocked) auch Beispiele für solche selbstsynchronisierenden Schaltkreise (self-timed logic) sind:

- selbstsynchronisierende synchrone Schaltkreise, welche den Takt ermitteln unter Verwendung einer "on-chip delay-line", wie z B. beschrieben in [6],
- asynchrone Schaltkreise mit einem selbstsynchronisierenden Datenpfad, z. B. ein doppelgleisiger (double-rail) Datenpfad, in welchem die Gültigkeit der Daten direkt in den Daten verschlüsselt ist (vergleiche [4] und [5]),
- asynchrone Schaltkreise mit einem sog. "delay-matched" Datenpfad, sog. "eingleisige" (single-rail) Schaltkreise oder Schaltkreise mit gebündelten Daten (bundled-data) (vergleiche [3, 4, 5]).

Diesen drei Varianten ist gemeinsam, dass die korrekte funktionale Operation des Schaltkreises unabhängig ist von der verfügbaren Stromversorgung. Natürlich wird die "Performance" dieser Schaltkreise in Abhängigkeit von der Spannungsschwankung variieren.

Um das Ausforschen von geheimen Daten, insbesondere auf der Grundlage von Messungen des Stromverbrauchs oder der Versorgungsspannung, zu verhindern, sind verschiedene Vorgehensweisen vorgeschlagen worden.

In der Offenlegungsschrift DE 199 07 575 A1 wird eine Schaltungsanordnung beschrieben zum Liefern eines Speisestroms für eine elektronische Schaltung aus einer Versorgungsspannungsquelle, mit einer steuerbaren Stromquellenanordnung, die zum Liefern eines ersten und eines zweiten vorbestimmten Konstantstromes umsteuerbar ist, wobei der zweite Konstantstrom größer ist als der erste Konstantstrom, und deren Eingang mit der Versorgungsspannungsquelle und deren Ausgang mit einem Energiespeicherelement und der elektronischen Schaltung verbunden ist, mit einer ersten Referenzspannungsquelle zum Bereitstellen einer ersten und einer dieser gegenüber größeren zweiten Referenzspannung sowie mit einer Vergleichsanordnung zum Vergleichen einer an der elektronischen Schaltung und dem Energiespeicherelement durch Zufuhr des Speisestroms hervorgerufenen Speisespannung mit der ersten und der zweiten Referenzspannung und zum Umsteuern der Stromquellenanordnung auf den ersten Konstantstrom, wenn die Speisespannung die zweite Referenzspannung überschreitet, bzw. auf den zweiten Konstantstrom, wenn die Speisespannung die erste Referenzspannung unterschreitet.

Bei diesem Verfahren wird erreicht, dass der Speisestrom und die Versorgungsspannung der elektrischen Schaltung nicht von den innerhalb der elektronischen Schaltung ablaufenden Vorgängen abhängen. Von einer Veränderung des Prozessortaktes wird dabei kein Gebrauch gemacht, statt dessen wird ist eine aufwendige Schaltung nötig.

In der Europäischen Patentanmeldung EP 1 098 472 A2 wird eine Verschlüsselungseinrichtung und deren Anwendung beschrieben, welche die Anfälligkeit gegen DPA reduziert. Dabei wird ein Codierschlüssel mit einer ersten Funktion transformiert, womit ein erster temporärer Schlüssel als Funktion einer Zufallszahl erzeugt wird. Eine Botschaft wird mit diesem temporären Schlüssel verschlüsselt, womit eine abgeänderte Botschaft erzeugt wird. Diese abgeänderte Botschaft wird durch eine zweite Funktion transformiert, um sie so zu verschlüsseln. Dabei ist diese Verschlüsselung identisch zu einer direkten Verschlüsselung durch den nicht-transformierten Schlüssel. Der temporäre Schlüssel wird ständig verändert, um DPA vorzubeugen.

Ein weiteres System, das Angriffe von Seiten der DPA verhindern soll, ist in der britischen Patentanmeldung GB 2 345 229 A offenbart. Es handelt sich darum, eine Botschaft zu verschlüsseln, indem ein Algorithmus zur Block-Chiffrierung genutzt wird Blöcke von Mitteilungen/Botochaften werden dabei mit Blöcken von Schlüsseln kombiniert. Dabei wird bei jedem Verschlüsselungsvorgang bzw. Iterationsschritt die Art und Weise variiert, in der die Blöcke kombiniert werden. Vorteilhaft wird die Kombination zufällig gewählt.

Nachteilig bei diesen Verfahren ist die Tatsache, dass bei Entschlüsselung des Codes die Daten zugänglich werden.

Die Erhöhung der Kartensicherheit bei Chipkarten durch Verwendung einer Spule auf der Karte wird in der WO 00/10124 A1 beschrieben. Durch die Spulen wird ein Ausspähen von Spannungsspitzen verhindert. Dieses Verfahren ist sowohl bei kontaktfreien Karten als auch bei Kontaktkarten anwendbar.

Durch den Einsatz einer Spule wird die Korrelation zwischen entsprechenden Signalverläufen nicht aufgehoben, sondern nur verwischt.

Eine weitere Maßnahme wird in der internationalen Patentanmeldung WO 00/19353 A1, gegen die die Ansprüche abgegrenzt sind, vorgestellt. Beschrieben wird ein Datenträger, insbesondere eine Chipkarte, mit einer Datenverarbeitungseinheit und wenigstens einer kontaktlosen Schnittstelle, über die die Datenverarbeitungseinheit mit einem Lese-/Schreibgerät zum Austausch von Datensignalen und zur Aufnahme elektrischer Energie zum Betrieb der Datenverarbeitungseinheit gekoppelt werden kann, worin die Datenverarbeitungseinheit zumindest überwiegend mit wenigstens weitgehend asynchron betriebenen Logikbausteinen aufgebaut ist.

Die internationale Patentanmeldung WO 01/08088 A1 stellt einen Mikrocontroller vor, der gegen Angriffe geschützt ist, welche unberechtigt Informationen aus dem Stromverbrauch des Mikrocontrollers ermitteln. Dieser Mikrocontroller kann beispielsweise auch in einer Chipkarte integriert sein. Dieser Mikrocontroller umfaßt neben den üblichen Elementen, wie einem Kontakt für die Versorgungsspannung (VCC), einem Kontakt für Ein- und Ausgabe, Prozessor und Speicher, außerdem ein Mittel, welches dazu dient, die Versorgungsspannung des Prozessors zu variieren.

Da aber auch eine asynchrone Logik zu korrelierenden Leistungsverläufen führt, müssen die vorgestellten Maßnahmen durch weitere Schutzvorkehrungen unterstützt werden, um eine DPA erfolgreich zu verhindern.

Der Erfindung liegt deshalb die Aufgabe zugrunde, ein Verfahren und eine Anordnung der gattungsgemäßen Art anzugeben, mittels welcher die Nachteile der herkömmlichen Schutzmaßnahmen behoben werden und insbesondere das Gewinnen von Informationen über das Innere einer elektrischen Schaltung aus einer Messung des Strom- bzw. Spannungsverbrauchs verhindert wird.

Erfindungsgemäß wird diese Aufgabe gelöst durch die Merkmale im kennzeichnenden Teil der Ansprüche 1 bzw. 4 im Zusammenwirken mit den Merkmalen im Oberbegriff. Zweckmäßige Ausgestaltungen der Erfindung sind in den Unteransprüchen enthalten.

Ein besonderer Vorteil des Verfahrens zur Erhöhung der Sicherheit von Schaltkreisen gegen unbefugten Zugriff besteht darin, dass durch Datenverarbeitungsvorgänge in selbstsynchronisierenden Schaltkreisen erzeugte Signalverläufe entkoppelt werden.

Eine Anordnung zur Erhöhung der Sicherheit von Schaltkreisen gegen unbefugten Zugriff zeichnet sich dadurch aus, dass zwischen der Stromversorgung eines selbstsynchronisierenden Schaltkreises und dem selbstsynchronisierenden Schaltkreis eine regelbare Einrichtung zur Stromregulierung geschaltet ist.

Die Entkopplung der Signalverläufe wird durch zeitliche Variation der Taktfrequenz des selbstsynchronisierenden Schaltkreises oder einzelner Funktionseinheiten des selbstsynchronisierenden Schaltkreises bewirkt. Dabei erfolgt die zeitliche Variation der Taktfrequenz durch zeitliche Variation des Speisestroms. Alternativ dazu ist es ebenso möglich, dass die zeitliche Variation der Taktfrequenz durch zeitliche Variation der Versorgungsspannung erfolgt.

Darüber hinaus ist in einer bevorzugten Ausgestaltung des erfindungsgemäßen Verfahrens vorgesehen, dass die zeitliche Variation des Speisestroms oder der Versorgungsspannung durch einen Zufallszahlengenerator gesteuert wird.

Als vorteilhaft erweist es sich, wenn die zeitliche Variation des Speisestroms oder der Versorgungsspannung durch Mittel erfolgt, die Teil einer Lese-/Schreibeinrichtung für Chipkarten sind und der mit dem zeitlich variierten Strom gespeiste oder der zeitlich variierten Spannung versorgte selbstsynchronisierende Schaltkreis auf einer Chipkarte, insbesondere einer Smartcard, enthalten ist.

Eine bevorzugte Ausgestaltung der erfindungsgemäßen Anordnung sieht vor, dass die Einrichtung zur Stromregulierung über einen D/A-Wandler mit einem Zufallszahlengenerator verbunden ist.

In einer bevorzugten Ausgestaltung der erfindungsgemäßen Anordnung sind die selbstsynchronisierenden Schaltkreise als asynchrone Handshake-Logik ausgebildet. Ebenso ist es möglich, dass die selbstsynchronisierenden Schaltkreise als synchrone Schaltkreise, die eine "on-chip delay-line" aufweisen, ausgebildet sind.

Ein Vorteil der erfindungsgemäßen Anordnung besteht darin, dass der selbstsynchronisierende Schaltkreis Teil eines Smartcard-Controllers ist.

Vorteilhaft sind ferner die Stromversorgung, die regelbare Einrichtung zur Stromregulierung und erforderlichenfalls der Zufallszahlengenerator und der D/A-Wandler Teil einer Lese-/Schreibeinrichtung für Chipkarten.

Die Erfindung verwendet einen neuen Ansatz, um integrierte Schaltkreise, welche selbstsynchronisierende Logik verwenden, insbesondere asynchrone sog. Handshake-Logik, gegen DPA zu schützen. Dabei wird eine besondere Eigenschaft der selbstsynchronisierenden Logik ausgenutzt, indem eine spezielle Stromversorgung eingesetzt wird. Dadurch laufen die Vorgänge in der selbstsynchronisierenden Logik in unvorhersehbarer Weise ab, so dass ein starkes Rauschen beim Stromverbrauch erzeugt wird und DPA nicht erfolgreich angewendet werden kann.

Vorteile dieser Erfindung bestehen insbesondere darin, das für den erweiterten Schutz der integrierten Schaltkreise nur wenige zusätzliche Komponenten benötigt werden.

Gegenüber den bisher geäußerten Ideen, wie die Anfälligkeit gegen DPA verringert werden könnte, ist die vorliegende Erfindung ein neuer Ansatz, welcher zumindest andere DPA-Gegenmaßnahmen unterstützt bzw. verstärkt. Eine bemerkenswerte Eigenschaft des neuen Ansatzes ist, dass ihre Implementierung im Gegensatz zu den meisten anderen Vorschlägen einfach und billig auszuführen ist. Die schwankende Versorgungsspannung lässt die selbstsynchronisierende Logik schneller bzw. langsamer laufen. Wenn die angelegte Spannung gering ist, läuft die selbstsynchronisierende Logik langsamer als bei einem mittleren Spannungspegel. Die Erfindung profitiert von diesem Effekt, indem sie die Spannungsversorgung und damit die Berechnungs-"Performance" kontrolliert, welche die Berechnungsphasen verschiebt. Das Ergebnis davon ist, dass die Berechnungsphasen innerhalb eines jeden Leistungsverlaufes keine Korrelation mehr aufweisen.

Die Stärke der Erfindung besteht somit darin, dass sie die Korrelation von Signalmustern, wie z. B. den zeitlichen Verlauf der Spannungsspitzen, mit einem bestimmten Datenverarbeitungsvorgang erheblich erschwert. Man kann deshalb davon ausgehen, dass die Anzahl der Versuche, Messwerte zu gewinnen, welche eine erfolgreiche Anwendung der DPA ermöglichen, im Vergleich zu einer konstanten Spannungs- oder Stromversorgung außerordentlich ansteigt.

Die Erfindung wird nachfolgend in einem Ausführungsbeispiel anhand der zugehörigen Zeichnungen näher erläutert. Es zeigen:

Fig. 1 zwei Beispiele für Leistungsverläufe S(1, t) und S(2, t);

Fig. 2 ein Blockschaltbild einer mit einem Stromregulierer ausgestatteten Stromversorgungseinrichtung für selbstsynchronisierende Schaltkreise und

Fig. 3 eine Darstellung der Stromregulierung mit Hilfe von Zufallszahlen.

Der wichtigste Teil der Erfindung besteht darin, die automatische Anpassung der "Performance" des Schaltkreises bzw. gewisser Logik-Blöcke auszunutzen in solcher Art, dass die Zuordnung der zeitlich verteilten Stromspitzen zu einem Datenverarbeitungsvorgang bzw. zu einer Berechnung, die zu dieser Zeit ausgeführt wird, erheblich erschwert wird.

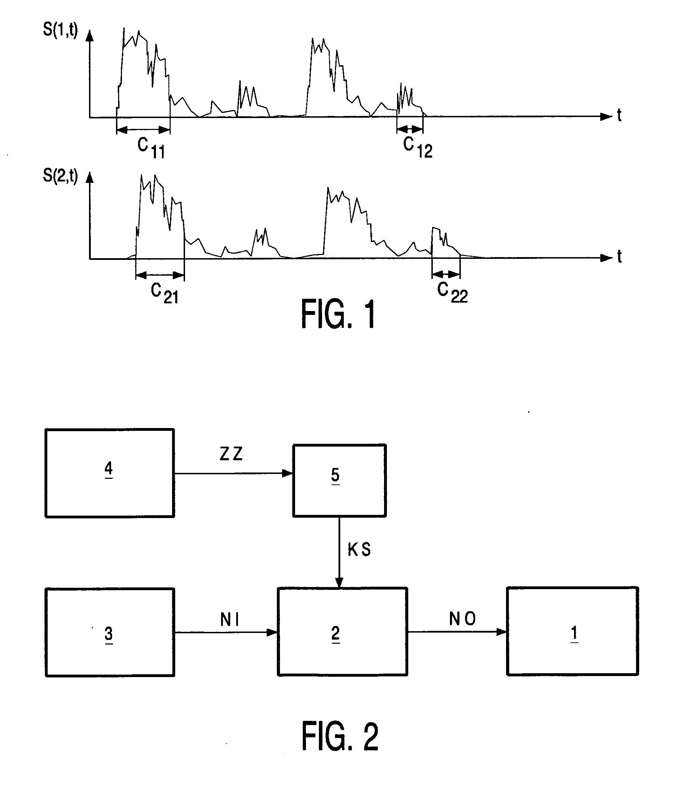

Die Idee der Erfindung besteht darin, die Korrelation zwischen den zu einem Datenverarbeitungsvorgang gehörenden Leistungsverläufen aufzuheben. Fig. 1 zeigt zwei verschiedene Leistungsverläufe. Für eine erfolgreiche DPA ist es sehr wichtig, dass die einzelnen Leistungsverläufe so ausgerichtet werden können, dass die Zeitabschnitte von korrespondierenden Berechnungsphasen (z. B. $C_{11}$ korrespondiert mit $C_{21}$) verschiedener Leistungsverläufe gleich sind. Unter dieser Bedingung enthüllt eine Summe T(i, t) (vgl. oben) geheime Informationen. In Fig. 1 korrespondieren die Berechnungsphasen nicht. $C_{11}$ paßt nicht zu $C_{21}$, und $C_{12}$ stimmt nicht mit $C_{22}$ überein.

Wenn man keine Maßnahmen gegen DPA ergreift, wird auch eine selbstsynchronisierende Logik zu korrelierenden Leistungsverläufen führen. Das heißt: die korrespondierenden Berechnungsphasen passen zueinander, so dass die Summenbildung T(i, t) erfolgreich angewendet werden kann.

In Verbindung mit der folgenden speziellen Stromversorgung verhält sich die selbstsynchronisierende Logik signifikant verschieden. Fig. 2 zeigt eine selbstsynchronisierende Logik 1, welche durch eine Spannung versorgt wird, die von einer externen Stromversorgung 3 über einen Stromregulator 2 bereitgestellt wird. Die Spannung der selbstsynchronisierenden Logik variiert zeitlich. Die Variationen werden durch einen Zufallszahlengenerator 4 gesteuert, der über einen Digital/Analog-Wandler 5 an den Stromregulator 2 angeschlossen ist. Dieser Digital/Analog-Wandler 5 wandelt die digitalen Zufallszahlen in analoge Kontrollsignale, welche eine schwankende Spannung bewirken. In Fig. 2 werden dabei folgende Bezeichnungen verwendet:

1 selbstsynchronisierende Logik
2 Stromregulator
3 externe Stromversorgung
4 Zufallszahlengenerator
5 Digital/Analog-Wandler

ZZ    Zufallszahlen
KS    Kontrollsignal
NI    Spannung "in" am Eingang des Stromregulators 2
NO    Spannung "out" am Ausgang des Stromregulators 2

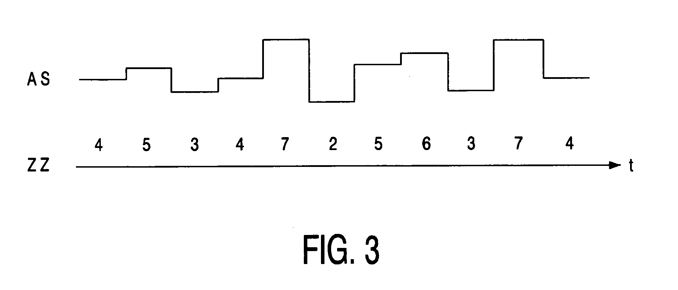

Fig. 3, bei der eine Ausgangsspannung AS über den Zufallszahlen ZZ dargestellt ist, gibt ein Beispiel dafür, wie die zufällig generierten Daten die Spannung kontrollieren. Der gewünschte Effekt ist, dass die schwankende Spannung die selbstsynchronisierende Logik schneller bzw. langsamer laufen lässt. Wenn die angelegte Spannung gering ist, läuft die selbstsynchronisierende Logik langsamer als bei einem mittleren Spannungspegel. Die Erfindung profitiert von diesem Effekt, indem sie die Spannungsversorgung und damit die Berechnungs-"Performance" kontrolliert, welche die Berechnungsphasen verschiebt. Das Ergebnis davon ist, das die Berechnungsphasen innerhalb eines jeden Leistungsverlaufes keine Korrelation mehr aufweisen.

Referenzen:

[1] "Introduction to Differential Power Analysis and Related Attacks". P. Kocher, J. Jaffe, B. Jun. Available from http://www.cryptography.com/dpa/technical

[2] "Differential Power Analysis", P. Kocher, J. Jaffe, B. Jun. Advances in Cryptology: Proceedings of Crypto '99, Springer-Verlag, 1999, pp. 388-397.

[3] "The Tangram Framework: Asynchronous Circuits for Low Power", J. Kessels and A Peeters. Proceedings of ASPDAC, February 2001, pp. 255-260.

[4] "Applications of Asynchronous Circuits", C. H. van Berkel, M. B. Josephs and S. M. Nowick. Proceedings of the IEEE, 87 (2), February 1999, pp. 223-233.

[5] "Low-Power Operation Using Self-Timed Circuits and Adaptive Scaling of Supply Voltage", L Nielsen, C. Niessen, J. Sparso, and K. van Berkel. IEEE Transactions on VLSI Systems, December 1994, pp. 391-397.

[6] "An Efficient Controller for Variable Supply-Voltage Low Power Processing", V. Gutnik and A Chandrakasan. Symposium on VLSI Circuits, Digest of Technical Papers, 1996, pp. 158-159.

**Patentansprüche**

1.  Verfahren zur Erhöhung der Sicherheit von Schaltkreisen, die selbstsynchronisierende Schaltkreise (1) umfassen, gegen unbefugten Zugriff,
    **dadurch gekennzeichnet,**
    **dass** zum Entkoppeln von Signalverläufen, die durch Datenverarbeitungsvorgänge in den selbstsynchronisierenden Schaltkreisen (1) erzeugt werden, mittels einer nach einer Zufallsfunktion gesteuerten zeitlichen Variation einer den selbstsynchronisierenden Schaltkreisen (1) oder einzelnen Funktionseinheiten der selbstsynchronisierenden Schaltkreise (1) zugeführten Versorgungsspannung und/oder eines zugeführten Speisestroms die Verarbeitungsgeschwindigkeit der Datenverarbeitungsvorgänge variiert wird.

2.  Verfahren nach Anspruch 1, **dadurch gekennzeichnet, dass** die zeitliche Variation der Versorgungsspannung oder des Speisestroms durch einen Zufallszahlengenerator (4) gesteuert wird.

3.  Verfahren nach einem der vorangehenden Ansprüche, **dadurch gekennzeichnet, dass** die zeitliche Variation der Versorgungsspannung oder des Speisestroms durch Mittel erfolgt, die Teil einer Lese-/Schreibeinrichtung für Chipkarten sind, und sich der mit dem zeitlich variierten Strom gespeiste oder der zeitlich variierten Spannung versorgte selbstsynchronisierende Schaltkreis (1) auf einer Chipkarte, insbesondere einer Smartcard, enthalten ist.

4.  Anordnung zur Erhöhung der Sicherheit von Schaltkreisen, die wenigstens einen selbstsynchronisierenden Schaltkreis (1) mit zugeordneter Stromversorgung (3) umfassen, gegen unbefugten Zugriff,
    **gekennzeichnet durch**
    eine zur Variation der Verarbeitungsgeschwindigkeit von Datenverarbeitungsvorgängen im selbstsynchronisierenden Schaltkreis (1) mittels nach einer Zufallsfunktion gesteuerter zeitlicher Variation oder Regulierung der zugeführten Versorgungsspannung und/oder des zugeführten Speisestroms vorgesehene regelbare Einrichtung (2), die zum Entkoppeln von durch die Datenverarbeitungsvorgänge erzeugten Signalverläufen zwischen die Stromversorgung (3) und den selbstsynchronisierenden Schaltkreis (1) geschaltet ist.

5. Anordnung nach Anspruch 4, **dadurch gekennzeichnet, dass** die Einrichtung (2) zur Stromregulierung zum Zuführen analoger Kontrollsignale über einen digitale Zufallszahlen in die Kontrollsignale umwandelnden D/A-Wandler (5) mit einem zum Erzeugen der Zufallszahlen eingerichteten Zufallszahlengenerator (4) verbunden ist.

6. Anordnung nach einem der Ansprüche 4 oder 5, **dadurch gekennzeichnet, dass** die selbstsynchronisierenden Schaltkreise (1) als asynchrone Handshake-Logik ausgebildet sind.

7. Anordnung nach einem der Ansprüche 4 oder 5, **dadurch gekennzeichnet, dass** die selbstsynchronisierenden Schaltkreise (1) als synchrone Schaltkreise, die eine on-chip delay-line aufweisen, ausgebildet sind.

8. Anordnung nach einem der Ansprüche 4 bis 7, **dadurch gekennzeichnet, dass** der selbstsynchronisierende Schaltkreis (1) Teil eines Smartcard-Controllers ist.

9. Anordnung nach einem der Ansprüche 4 bis 8, **dadurch gekennzeichnet, dass** die Stromversorgung (3) und die regelbare Einrichtung (2) Teil einer Lese-/Schreibeinrichtung für Chipkarten sind.

10. Anordnung nach einem der Ansprüche 4 bis 9, **dadurch gekennzeichnet, dass** der Zufallszahlengenerator (4) und der D/A-Wandler (5) Teil einer Lese-/Schreibeinrichtung für Chipkarten sind.

**Claims**

1. A method of increasing the protection of circuits comprising self-timed circuits (1) against unauthorized access, **characterized in that** in order to decouple signal traces which are generated by data processing operations in the self-timed circuits (1) the processing speed of the data processing operations is varied by means of an applied supply voltage varied over time under the control of a random function of one of the self-timed circuits (1) or individual function units of the self-timed circuit (1).

2. A method as claimed in claim 1, **characterized in that** the variation of the supply current or supply voltage over time is controlled by a random number generator (4).

3. A method as claimed in any one of the preceding claims, **characterized in that** the variation of the supply current or supply voltage over time is performed by means that are part of a read/write device for chip cards and in which is included the self-timed circuit (1) on a chip card, and particularly a smart card, which circuit is fed with the current that varies over time or is supplied with the voltage that varies over time.

4. An arrangement for increasing the protection against unauthorized access of circuits that comprise at least one self-timed circuit (1) with assigned power supply (3), **characterized by** a device (2) for current regulation, for varying the processing speed of data processing operations in the self-timed circuit (1) by means of a variation or regulation of the applied supply voltage and/or of the applied supply current over time controlled by a random function, which device (2) for current regulation, for decoupling signal traces generated as a result of the data processing operations, is connected between the power supply (3) and the self-timed circuit (1).

5. An arrangement as claimed in claim 4, **characterized in that**, for supplying analog control signals, the device (2) for current regulation is connected via a digital-to-analog converter (5) converting digital random numbers into the control signals, to a random number generator (4) arranged for generating the random numbers.

6. An arrangement as claimed in either one of claims 4 or 5, **characterized in that** the self-timed circuits (1) are in the form of non-clocked handshake logic.

7. An arrangement as claimed in either one of claims 4 or 5, **characterized in that** the self-timed circuits (1) are in the form of clocked circuits that have an on-chip delay line.

8. An arrangement as claimed in any one of claims 4 to 7, **characterized in that** the self-timed circuit (1) is part of a smart-card controller.

9. An arrangement as claimed in any one of claims 4 to 8, **characterized in that** the power supply (3) and the controllable device (2) are part of a read/write device for chip cards.

**10.** An arrangement as claimed in any one of claims 4 to 9, **characterized in that** the random number generator (4) and the digital-to-analog converter (5) are part of a read/write device for chip cards.


**Revendications**

**1.** Procédé pour augmenter la sécurité, contre un accès non-autorisé, de circuits qui comprennent des circuits auto-synchronisés (1),
**caractérisé en ce que**
pour le découplage de tracés de signaux qui sont engendrés par des processus de traitement des donnés dans les circuits auto-synchronisés (1), on fait varier la vitesse de traitement des processus de traitement des données au moyen d'une variation en fonction du temps, commandée d'après une fonction aléatoire, d'une tension d'alimentation acheminée aux circuits auto-synchronisés (1) ou à certaines unités fonctionnelles des circuits auto-synchronisés (1) et/ou d'un courant d'alimentation acheminé.

**2.** Procédé selon la selon la revendication 1, **caractérisé en ce que** la variation de la tension d'alimentation ou du courant d'alimentation en fonction du temps est commandée par un générateur de nombres au hasard (4).

**3.** Procédé selon l'une quelconque des revendications précédentes, **caractérisé en ce que** la variation de la tension d'alimentation ou du courant d'alimentation en fonction du temps s'effectue par des moyens qui font partie d'un dispositif de lecture et d'écriture pour des cartes à puce, et **en ce que** le circuit auto-synchronisé (1) alimenté par le courant qui est varié en fonction du temps ou par la tension qui est variée en fonction du temps est contenu sur une carte à puce, en particulier sur une carte à puce « smartcard ».

**4.** Agencement pour augmenter la sécurité, contre un accès non-autorisé, de circuits qui comprennent au moins un circuit auto-synchronisé (1) avec une alimentation en courant (3) qui lui est affectée,
**caractérisé par**
un dispositif (2) pouvant être régulé, prévu pour la variation de la vitesse de traitement de processus de traitement des données dans le circuit auto-synchronisé (1) commandé au moyen d'une variation, en fonction du temps d'après une fonction aléatoire, ou au moyen d'une régulation de la tension d'alimentation amenée et/ou du courant d'alimentation amené, qui est monté entre l'alimentation en courant (3) et le circuit auto-synchronisé (1) pour le découplage de tracés de signaux engendrés par les processus de traitement des données.

**5.** Agencement selon la revendication 4, **caractérisé en ce que** pour l'amenée de signaux de contrôle analogiques, le dispositif (2) pour la régulation du courant est relié à un générateur de nombres au hasard (4) configuré pour la génération de nombres au hasard, via un convertisseur N/A (5) convertissant des nombres au hasard numériques en les signaux de contrôle.

**6.** Agencement selon l'une quelconque des revendications 4 ou 5, **caractérisé en ce que** les circuits auto-synchronisés (1) sont réalisés comme logiques « handshake » asynchrone.

**7.** Agencement selon l'une quelconque des revendications 4 ou 5, **caractérisé en ce que** les circuits auto-synchronisés (1) sont réalisés comme circuits synchrones qui comportent une ligne à retard sur la puce.

**8.** Agencement selon l'une quelconque des revendications 4 à 7, **caractérisé en ce que** le circuit auto-synchronisé (1) fait partie d'un contrôleur de carte à puce.

**9.** Agencement selon l'une quelconque des revendications 4 à 8, **caractérisé en ce que** l'alimentation en courant (3) et le dispositif pouvant être régulé (2) font partie d'un dispositif de lecture/écriture pour des cartes à puce.

**10.** Agencement selon l'une quelconque des revendications 4 à 9, **caractérisé en ce que** le générateur de nombres au hasard (4) et le convertisseur N/A (5) font partie d'un dispositif de lecture/écriture pour des cartes à puce.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0019353 A
- DE 19907575 A1
- EP 1098472 A2
- GB 2345229 A
- WO 0010124 A1
- WO 0019353 A1
- WO 0108088 A1

**In der Beschreibung aufgeführte Nicht-Patentliteratur**

- **P. KOCHER ; J. JAFFE ; B. JUN.** *Introduction to Differential Power Analysis and Related Attacks, http://www.cryptography.com/dpa/technical*
- Differential Power Analysis. **P. KOCHER ; J. JAFFE ; B. JUN.** Advances in Cryptology: Proceedings of Crypto '99. Springer-Verlag, 1999, 388-397
- **J. KESSELS ; A PEETERS.** The Tangram Framework: Asynchronous Circuits for Low Power. *Proceedings of ASPDAC,* Februar 2001, 255-260
- **C. H. VAN BERKEL ; M. B. JOSEPHS ; S. M. NOWICK.** Applications of Asynchronous Circuits. *Proceedings of the IEEE,* Februar 1999, vol. 87 (2), 223-233
- **L NIELSEN ; C. NIESSEN ; J. SPARSO ; K. VAN BERKEL.** Low-Power Operation Using Self-Timed Circuits and Adaptive Scaling of Supply Voltage. *IEEE Transactions on VLSI Systems,* Dezember 1994, 391-397
- **V. GUTNIK ; A CHANDRAKASAN.** An Efficient Controller for Variable Supply-Voltage Low Power Processing. *Symposium on VLSI Circuits, Digest of Technical Papers,* 1996, 158-159